(19) Europäisches Patentamt
European Patent Office
Office européen des brevets

(11) Numéro de publication : **0 373 979 B1**

(12) # FASCICULE DE BREVET EUROPEEN

(45) Date de publication du fascicule du brevet :
**28.04.93 Bulletin 93/17**

(51) Int. Cl.$^5$ : **G01B 11/00,** G01B 11/14,
G01C 3/32, G01S 11/00

(21) Numéro de dépôt : **89403075.8**

(22) Date de dépôt : **08.11.89**

(54) **Procédé pour estimer la distance entre un objet fixe et un véhicule en déplacement et dispositif pour la mise en oeuvre de ce procédé.**

(30) Priorité : **15.11.88 FR 8814804**

(43) Date de publication de la demande :
**20.06.90 Bulletin 90/25**

(45) Mention de la délivrance du brevet :
**28.04.93 Bulletin 93/17**

(84) Etats contractants désignés :
**DE GB**

(56) Documents cités :
**EP-A- 0 005 918
FR-A- 2 611 053
GB-A- 2 018 084**

(73) Titulaire : **THOMSON-CSF
51, Esplanade du Général de Gaulle
F-92800 Puteaux (FR)**

(72) Inventeur : **Le Parquier, Guy
THOMSON-CSF SCPI Cédex 67
F-92045 Paris la Défense (FR)**
Inventeur : **Fousse, Henri
THOMSON-CSF SCPI Cédex 67
F-92045 Paris la Défense (FR)**

(74) Mandataire : **Turlèque, Clotilde et al
THOMSON-CSF, SCPI, B.P. 329, 50, rue
Jean-Pierre Timbaud
F-92402 Courbevoie Cédex (FR)**

## Description

L'invention concerne un procédé pour estimer la distance entre un objet fixe, par exemple le sol, et un véhicule en déplacement, par exemple un avion, en utilisant une suite d'images analysées par un capteur monté sur le véhicule. Si ces images sont centrées dans la direction de déplacement du véhicule, tout objet grandit d'image à image, au fur et à mesure que le véhicule se rapproche de l'objet, puis disparaît en sortant de l'image lorsque le véhicule passe à proximité de l'objet. La taille de l'image de l'objet et sa position dans l'image analysée varient continuement en fonction de la distance du véhicule à l'objet.

Des procédés connus permettent d'estimer la distance entre un objet fixe et un véhicule sur lequel est monté un capteur d'images. Ces procédés connus ont pour caractéristique commune d'utiliser une différentiation spatiale des images, pour mettre en évidence les contours des objets. Le déplacement des contours permet ensuite d'évaluer la vitesse de différents objets présents dans l'image. Le champ de vitesse ainsi déterminé permet d'estimer la distance du véhicule. Le brevet US 4 746 790 peut par exemple être cité pour illustrer l'état de la technique.

Les procédés connus sont très sensibles au bruit car ils utilisent une différentiation spatiale d'image pour mettre en évidence les contours des objets, puis un traitement différentiel temporel, pour mettre en évidence les déplacements des contours. Ces deux différentiations successives favorisent les fréquences élevées, spatiales et temporelles. Le rapport signal sur bruit est donc très affecté. Ils sont donc particulièrement mal adaptés pour des images très bruitées telles que les images fournies par une caméra infrarouge. D'autre part, ils ont de la peine à retrouver des contours lorsque ceux-ci sont constitués de transitions douces. Enfin, la détermination des contours dans chaque image nécessite beaucoup de calculs, qui sont difficiles à réaliser en temps réel.

Le but de l'invention est de remédier à ces inconvénients. L'objet de l'invention est un procédé utilisant une intégration de la suite des images analysées par le capteur, en agrandissant virtuellement ces images selon diverses lois de grandissement fonctions du temps, au lieu d'une différentiation. Cette intégration permet de filtrer le bruit, par conséquent le procédé est relativement insensible au bruit.

Selon l'invention, il est réalisé un procédé pour estimer la distance entre un objet fixe et un véhicule en déplacement, caractérisé en ce qu'il consiste à :
- analyser des images de l'objet au moyen d'un capteur d'images monté sur le véhicule ;
- centrer les images par rapport au véhicule de vecteur vitesse aligné sur l'axe optique du capteur ;
- intégrer, dans une pluralité de mémoires d'image correspondant respectivement à une pluralité de valeurs prédéterminées pour la distance, les valeurs de luminance des pixels des images analysées successivement par le capteur, et les valeurs de luminance des pixels d'une suite d'images dites prédites, la valeur de luminance de chaque pixel d'une image prédite étant déterminée : en fonction de la valeur de luminance intégrée pour le pixel considéré ; en fonction de la vitesse du véhicule ; en fonction de la position du pixel, dans l'image prédite ; et en fonction de la valeur de distance correspondant à la mémoire considérée ; de telle sorte que l'image prédite est affectée d'un grandissement croissant en fonction du temps ;
- rechercher, dans la pluralité de mémoires, celle où la valeur de luminance intégrée présente le plus grand contraste, et en déduire une estimation de distance.

L'invention sera mieux comprise et d'autres détails apparaîtront à l'aide de la description ci-dessous et des figures l'accompagnant :
- la figure 1 est un schéma d'optique illustrant le phénomène optique utilisé dans le procédé selon l'invention ;
- la figure 2 représente des exemples de graphes de l'angle sous lequel le capteur voit un objet, à partir d'un véhicule en déplacement, en fonction de la distance parcourue par ce véhicule dans la direction de l'objet ;
- la figure 3 représente le schéma synoptique d'un exemple de réalisation d'un dispositif pour la mise en oeuvre du procédé selon l'invention ;
- les figures 4 à 6 illustrent le fonctionnement de cet exemple de réalisation ;
- les figures 7 à 9 représentent schématiquement le fonctionnement d'une partie de cet exemple de réalisation ;
- la figure 10 représente le schéma synoptique plus détaillé d'une partie de cet exemple de réalisation.

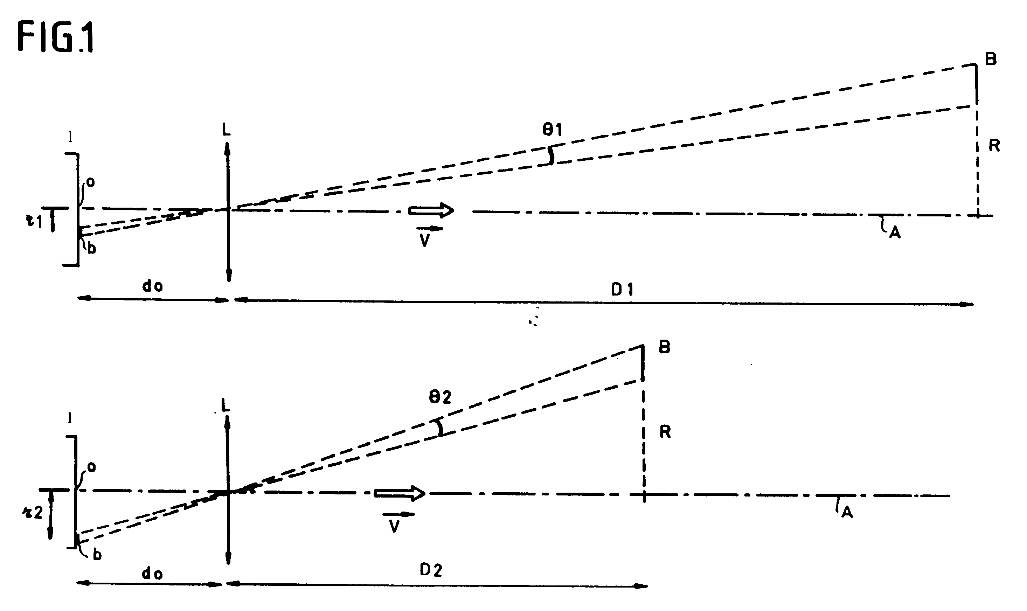

La figure 1 illustre le fonctionnement d'un capteur d'images 1 lorsque le véhicule supportant ce capteur d'images se déplace avec une vitesse constante V dans une direction voisine de la direction d'un objet B, sans être confondue avec cette direction. Un système optique L forme l'image b de l'objet dans le plan du capteur 1. La distance $d_0$ entre le système optique L et le capteur 1 est fixe. L'axe optique A du capteur d'image est supposé aligné sur le vecteur vitesse V. En pratique, le centre o de l'image peut être stabilisé dans la direction du vecteur vitesse V par un dispositif de recalage d'images de type connu, asservi à un dispositif inertiel de type connu. L'axe à du capteur d'images peut alors ne pas être confondu avec l'axe de la vitesse du véhicule, car la valeur de luminance de chaque pixel de l'image est recalculée pour obtenir une image équivalente à celle obtenue lorsque le capteur 1 est centré dans la direction du vecteur V.

Lorsque l'objet B est à un distance D1 du véhicule, il est vu sous un angle θ1 et son image b est située à une distance r1 du centre o du capteur, c'est-à-dire du centre de l'image. Après un certain temps, le véhicule s'étant déplacé en ligne droite, l'objet B est à une distance D2, inférieure à D1. L'objet B reste à une distance R constante par rapport à l'axe A. L'objet B est alors vu sous un angle θ2 supérieur à θ1. Son image b est alors située à une distance r2 du centre o du capteur, r2 étant supérieure à r1, et la taille de l'image b étant supérieure à celle qu'elle avait précédemment.

$$\frac{r(t)}{d0} = \frac{R}{D(t)} \quad (1)$$

On montre que la distance r(t) entre le centre o de l'image analysée par le capteur, et le centre de l'image b de l'objet varie avec une vitesse proportionnelle à la distance r(t) et à la dérivée logarithmique de la distance D(t) entre le véhicule et l'objet B.

$$\frac{dr}{dt} = \frac{r(t)}{D(t)} \times \frac{dD(t)}{dt} = - \frac{r(t)}{D'(t)} \cdot V \quad (2)$$

D'autre part, on montre que la taille de l'image b de l'objet est inversement proportionnelle à la distance D(t).

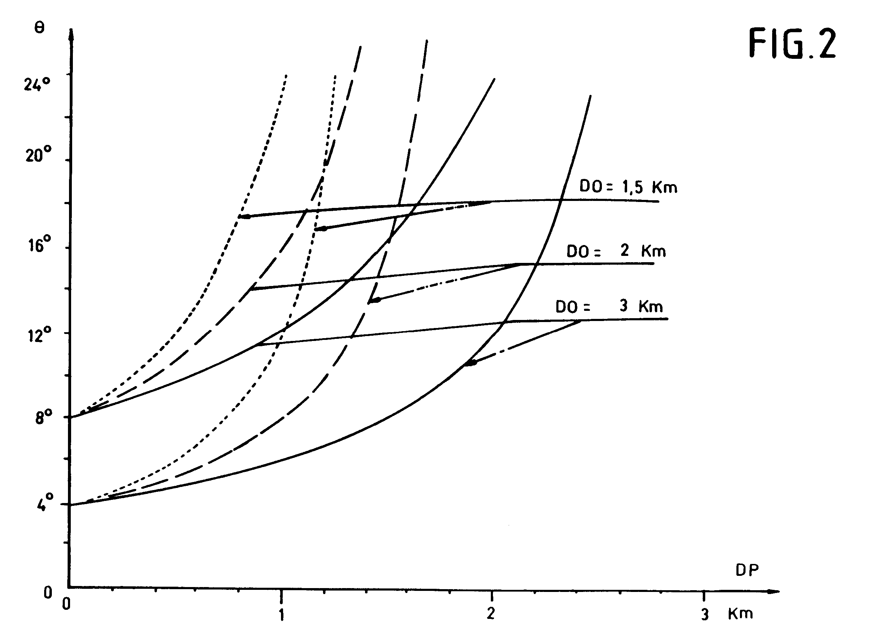

La figure 2 représente des exemples de graphes de l'angle θ sous lequel le capteur voit un objet, lorsque le véhicule se déplace, en fonction de la distance DP parcourue par le véhicule. La valeur de θ détermine la taille de l'image b de l'objet. Un premier objet est vu sous un angle de 4° à l'instant initial correspondant à une distance parcourue nulle. Un second objet est vu sous un angle de 8° à l'instant initial. Pour chacun de ces objets, trois graphes montrent respectivement la variation de l'angle θ pour une valeur de distance initiale D0=1,5km, puis 2km, puis 3km. Il apparaît que pour un même objet, par exemple celui vu sous un angle de 4° initialement, les trois graphes se séparent très nettement au fur et à mesure que le véhicule se rapproche de l'objet. Cette séparation des graphes permet de penser qu'il est possible d'estimer la distance initiale D0, puis la distance à chaque instant, à partir de l'évolution du graphe de l'angle θ observé. Il est à noter que la distance r(t) entre le centre o de l'image et le centre de l'image b de l'objet varie selon des graphes similaires à ceux représentés sur la figure 2.

Supposons que les images successivement analysées par le capteur 1 soient intégrées dans une mémoire en accumulant les valeurs de luminance successives de chaque pixel respectivement dans une case de la mémoire, et supposons que cette mémoire soit relue constamment pour afficher sur un écran une image résultant de cette intégration. Cette image résultante comporterait une zone floue autour de l'image b de l'objet, puisqu'il n'y aurait pas superposition exacte des différentes images b de l'objet.

Maintenant, supposons que l'on connaisse la distance D(t) à chaque instant t et que l'on remplace le système optique L à focale fixe, par un zoom dont la distance focale soit asservie en fonction de la distance D(t) de façon à maintenir constante la taille et la position de l'image b de l'objet. Dans ce cas, l'image intégrée apparaîtrait parfaitement nette puisqu'il y aurait superposition exacte de la suite des images analysées par le capteur. L'image serait donc parfaitement nette si, et seulement si, la distance focale du zoom était parfaitement asservie à la distance D(t) entre le véhicule et l'objet. Cette distance D(t) varie selon une loi temporelle linéaire très simple qui peut être exprimée en fonction de la distance D0 à un instant initial et en fonction du module V de la vitesse du véhicule, vitesse qui est supposée constante et parfaitement connue :

$$D(t) = D0 - V.t \quad (3)$$

Si, au contraire de la supposition précédente, le problème est de déterminer à chaque instant la distance D(t), on peut imaginer d'utiliser une pluralité de capteurs, une pluralité de zooms, et une pluralité de dispositifs d'asservissement réglant la distance focale des zooms selon une pluralité de lois temporelles, correspondant respectivement à une pluralité de valeurs de distance initiale pour une même vitesse V connue. La suite des images analysées par chacun des capteurs est supposée intégrée dans une mémoire et affichée sur un écran. Parmi la pluralité d'images ainsi obtenues sur les écrans, il n'y en a qu'une parfaitement nette. C'est celle qui correspond à la loi d'asservissement qui prédit à chaque instant une valeur de distance égale à la distance D(t) réelle.

Ce préambule permettra de mieux comprendre le procédé selon l'invention car il met en oeuvre, lui aussi, une pluralité de lois temporelles parmi lesquelles une seule donne la valeur réelle de la distance D(t) à chaque instant. Il ne consiste pas à faire varier la distance focale d'un zoom mais il consiste à calculer les valeurs de luminance d'une image prédite à partir d'une loi hypothétique donnant la distance D(t) en fonction du temps. Une pluralité d'images prédites est calculée respectivement pour une pluralité de lois temporelles. La suite des images prédites au moyen de chaque loi temporelle est intégrée dans une mémoire d'image en même temps que la suite des images analysées par le capteur. Dans la mémoire correspondant à la loi temporelle exacte, les valeurs de luminance intégrées ont alors un contraste maximal, car l'image intégrée est nette. Au contraire, dans les mémoires correspondant aux lois temporelles inexactes, les valeurs de luminances intégrées ont un contraste plus faible correspondant à une image intégrée qui est floue à cause de la superposition des images prédites dans lesquelles la position et la taille de l'image de l'objet ne sont pas exactement égales à la position et à la taille de l'objet dans les images analysées. Naturellement, puisque la taille de l'objet et sa position varient dans le temps, il est nécessaire de réaliser une intégration avec fuite, pour réduire le poids des valeurs de luminance des images les plus anciennes par rapport aux images les plus récentes.

L'estimation de la valeur de distance D(t), à chaque instant, consiste alors à rechercher continuellement, parmi les mémoires, celle où la valeur de luminance intégrée présente le plus grand contraste.

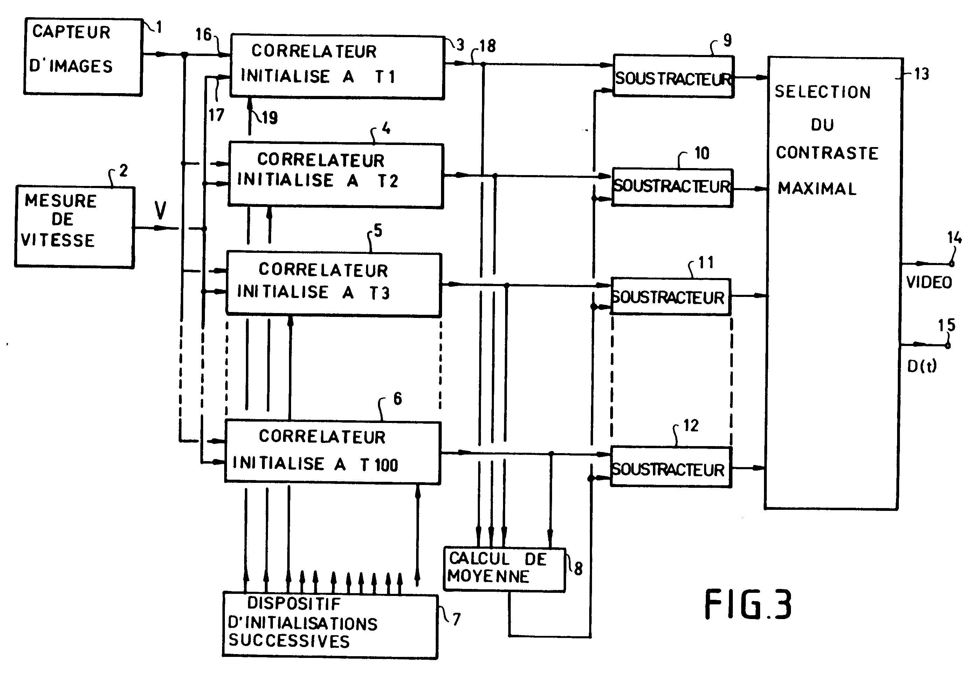

La figure 3 représente le chemin synoptique d'un exemple de réalisation d'un dispositif pour la mise en oeuvre du procédé selon l'invention. Il comporte : un capteur d'images 1 ; un dispositif 2 de mesure de vitesse du véhicule ; une pluralité de corrélateurs, 3 à 6 ; un dispositif 7 d'initialisations successives ; un dispositif 8 de calcul de moyenne ; une pluralité de soustracteur 9 à 12 ; un dispositif 13 de sélection du contraste maximal ; une borne de sortie 14 pour fournir un signal vidéo ; et une borne de sortie 15 pour fournir une estimation de distance D(t).

Chaque corrélateur est associé à un soustracteur et correspond à une loi temporelle différente. Par exemple le nombre de corrélateurs est égal à 100. Chaque corrélateur est initialisé à un instant différent, respectivement T1, T2, T3,..., T100, mais avec une valeur de distance initiale identique, DI, égale à la distance maximale de visibilité d'un objet. Les cent lois temporelles fournissant les valeurs hypothétiques de distance sont alors les suivantes :

$$D1(t) = DI - V.(t-T1)$$

$$D2(t) = DI - V.(t-T2)$$

$$\vdots \tag{4}$$

$$D100(t) = DI - V.(t-T100)$$

Ces lois temporelles donnent les mêmes valeurs que des lois temporelles de la forme D0-V.t où la valeur initiale de la distance, D0, serait différente pour chaque loi. La résolution de la mesure dépend du nombre de lois et de l'intervalle de temps entre les différents instants d'initialisation des corrélateurs. Le choix de la valeur DI et le choix des instants T1 à T100 dépend de l'application envisagée et est à la portée de l'homme de l'art. En général la résolution souhaitée pour des longues distances est moins importante que la résolution souhaitée pour les courtes distances. Par conséquent, les intervalles entre les instants d'initialisation T1,...,T100, ne sont pas choisis identiques. D'autre part, le procédé est plus sensible aux variations de distance lorsque les distances sont faibles que lorsque les distances sont grandes. C'est donc une raison de plus de choisir des instants d'initialisation permettant d'obtenir une meilleure résolution pour les faibles distances.

Chaque corrélateur, tel que le corrélateur 3, possède une borne d'entrée 16 reliée à la sortie du capteur d'images 1, une borne d'entrée 17 reliée à la sortie du dispositif 2 de mesure de vitesse, et une borne d'entrée d'initialisation 19 reliée à une sortie du dispositif 7 ; et possède une borne de sortie 18 reliée à une entrée du dispositif 8 et à une première entrée du soustracteur 9. Chaque soustracteur 9 à 12 possède une seconde entrée reliée à la sortie du dispositif 8, et une sortie reliée respectivement à une entrée du dispositif 13. Deux sorties du dispositif 13 sont reliées respectivement aux bornes de sortie 14 et 15.

Chaque corrélateur, tel que le corrélateur 3, reçoit, par sa borne d'entrée 16, une suite de valeurs numériques qui sont les valeurs de luminance d'une l'image analysée par le capteur d'images 1 ; et reçoit, par sa borne d'entrée 17, une mesure de vitesse V fournie par le dispositif 2. Chaque corrélateur fournit, par sa borne de sortie 18, une suite de valeurs numériques qui sont des valeurs de luminance intégrées, chaque valeur correspondant à un pixel.

A un instant donné, les corrélateurs 3 à 6 fournissent des valeurs de luminance intégrées correspondant à des pixels homologues, c'est-à-dire ayant la même position dans une image. Le dispositif 8 calcule une valeur moyenne des valeurs de luminance intégrées fournies par les corrélateurs 3 à 6 pour une image. Les soustracteurs 9 à 12 calculent respectivement la différence entre chaque valeur de luminance intégrée et la valeur moyenne fournie par la sortie du dispositif 8. Chaque valeur de différence traduit le contraste d'un pixel de l'image intégrée, par rapport à la luminance moyenne locale de cette image intégrée.

Ce dispositif constitue un détecteur de fréquences spatiales élevées qui est exempt de bruit, pour la raison suivante. Si l'image d'un objet est nette à la sortie de l'un des corrélateurs 3 à 6, elle est obligatoirement floue à la sortie des autres corrélateurs, et a fortiori à la sortie du dispositif 8 calculant une moyenne. La sortie du dispositif 8 de calcul d'une moyenne fournit donc un signal traduisant une image moyenne très floue, et exempte de bruit car la moyenne est calculée sur un grand nombre d'images intégrées (100). La soustraction de cette image moyenne, à chacune des images intégrées correspondant aux signaux de sortie des corrélateurs, n'apporte donc aucun bruit supplémentaire. Elle permet donc d'atténuer très fortement les fréquences spatiales basses du fond, sans altérer les fréquences spatiales élevées, qui correspondent aux contours.

Le dispositif 13 compare les valeurs des différences fournies par les soustracteurs 9 à 12 pour chaque pixel, et détermine la valeur la plus grande. Il fournit, sur la borne de sortie 14, cette valeur la plus grande ; et, sur la borne de sortie 15, un mot binaire D(t) qui est une valeur de distance sélectionnée parmi les cent valeurs possibles : D1(t),...,D100(t). La valeur sélectionnée est calculée à l'instant t, par le dispositif 13, selon l'une des formules (6) ci-dessous. La formule sélectionnée correspond à la différence de luminance ayant la valeur absolue la plus grande pour le pixel considéré.

La suite des valeurs numériques des différences de luminance, fournie par borne de sortie 14, peut être appliquée à un dispositif de visualisation pour restituer une image de la scène observée par le capteur d'images 1. La structure du dispositif 13 n'est pas décrite plus en détail car la réalisation de moyens pour comparer les valeurs des différences, pour sélectionner l'une d'entre elles, et pour calculer la distance D(t) correspondante, est à la portée de l'homme de l'art.

Chacun des corrélateurs 3 à 6 intègre avec une fuite, dans une mémoire dite mémoire d'image intégrée, les valeurs de luminance des images analysées successivement par le capteur 1, et les valeurs de luminance des images prédites. La valeur de luminance de chaque pixel d'une image prédite est déterminée en fonction de la position du pixel considéré, dans l'image prédite considérée, en fonction de la vitesse V du véhicule, et en fonction du temps qui s'est écoulé à partir de l'instant d'initialisation du corrélateur.

La position initiale et la taille initiale de l'objet dans la première image prédite, c'est-à-dire juste après l'instant d'initialisation du corrélateur, sont constituées respectivement par la position et la taille de l'objet dans l'image analysée à cette instant par le capteur. Ensuite, pour les autres images prédites, la position et la taille sont déduites de la position et de la taille de l'image de l'objet telles qu'elles sont représentées par l'image intégrée. Chaque image prédite est donc fonction à la fois des précédentes images prédites et des précédentes images analysées, mais un coefficient de fuite est prévu pour que le poids des images les plus anciennes diminue au fur et à mesure que le temps s'écoule.

Dans l'image prédite, l'information de luminance représentant chaque pixel est déplacée radialement, par rapport au centre o de l'image qui est confondu avec le vecteur vitesse V du véhicule. Les informations de luminance de tous les pixels situés sur un cercle de rayon donné sont déplacés de manière identique, qu'ils représentent ou non un objet. Le déplacement de l'information de luminance d'un pixel consiste à attribuer cette valeur de luminance à l'un des pixels voisins, la structure discontinue de l'image conduit à des déplacements en zigzag permettant d'obtenir une trajectoire moyenne qui est radiale.

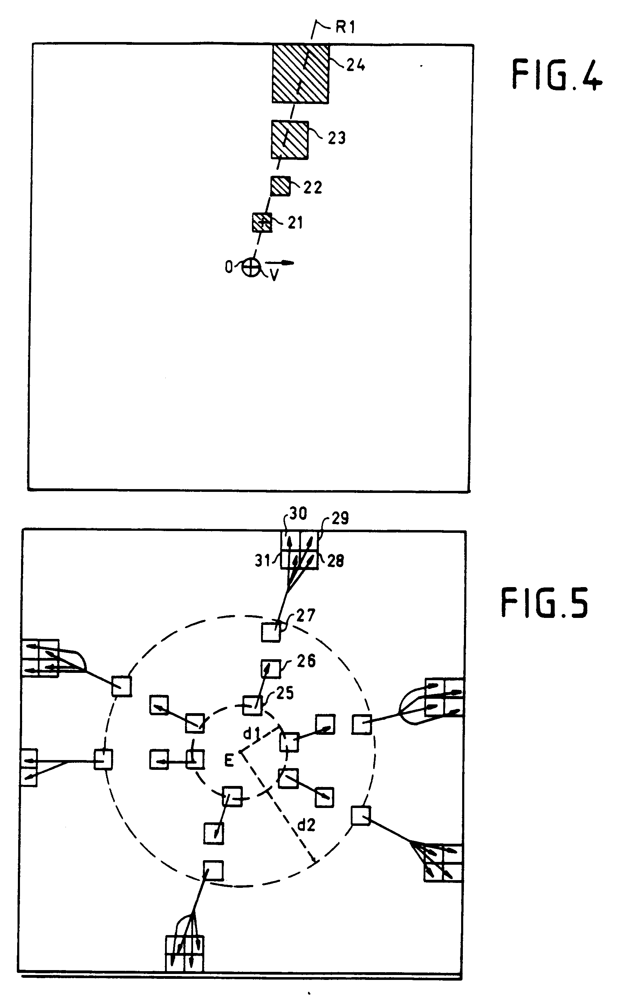

La figure 4 représente le déplacement de l'image d'un objet à l'intérieur des images analysées. L'image de l'objet se déplace sur une demi-droite radiale R1, en direction du bord de l'image. L'image de l'objet occupe un seul pixel, 21, dans la première image analysée dans laquelle l'objet est perçu pour la première fois. Puis, dans la deuxième image analysée, elle occupe un pixel 22, un peu plus éloigné du centre que le précédent pixel 21. Puis, dans la troisième image, il occupe un groupe 23 de quatre pixels. Puis, dans la quatrième image, il occupe un groupe 24 de neuf pixels. Au fur et à mesure du déplacement de l'image de l'objet, celle-ci augmente de taille par une homothétie ayant un rapport proportionnel à la distance r(t) entre le centre o de l'image et le centre de l'image de l'objet. Dans cet exemple, l'image de l'objet a une forme carrée, mais il va de soi qu'elle peut avoir une forme plus complexe avec des bords ayant une luminance décroissante.

L'image est échantillonnée sous la forme de pixels carrés qui sont superposés sans décalage d'une ligne à l'autre. Dans d'autres exemples, l'image pourrait avoir un format rectangulaire ou bien avoir une structure d'échantillonnage différente.

La suite des images prédites, lorsqu'elle est prédite selon une loi temporelle donnant une valeur de distance identique à la distance réelle, à chaque instant, coïncide avec la suite des images analysées, à une approximation près qui est due aux erreurs d'échantillonnage de l'image et au nombre limité de lois temporelles utilisées.

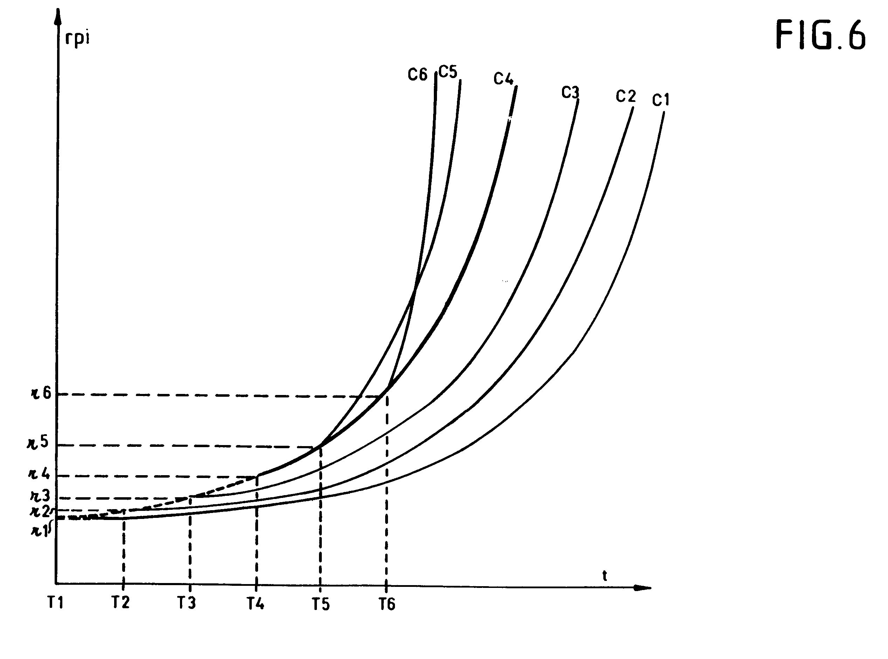

La figure 5 illustre le procédé mis en oeuvre par chacun des corrélateurs 3 à 6 pour déterminer une image prédite à partir de l'image intégrée. Cette figure représente schématiquement la mémoire d'image intégrée et les transferts d'information à l'intérieur de celle-ci lors de l'addition de l'image prédite à l'image intégrée. L'addition de l'image analysée au même instant n'est pas représentée sur cette figure. Chaque carré représente une cellule de la mémoire et correspond à un pixel d'image. La détermination d'une image prédite, et son addition, consiste à déplacer les valeurs de luminance de l'image intégrée, le long de demi-droites radiales passant par le centre E de la mémoire d'images.

Celle-ci a par exemple 512x512 cellules réparties sous la forme d'un carré correspondant aux 512x512 pixels d'une image. Les distances considérées à l'intérieur de la mémoire et les distances considérées à l'intérieur des images sont exprimées en pixels. Toutes les valeurs de luminance situées dans des cellules 25 qui sont situées à une distance d1 du centre E de la mémoire sont déplacées simultanément et avec une même vitesse centrifuge, respectivement vers d'autres cellules 26 plus éloignées du centre E et situées elles-mêmes sur un même cercle. Les valeurs de luminance situées dans des cellules 27 à une distance d2 du centre E sont déplacées vers d'autres cellules 28 à 31 plus éloignées du centre E, toutes avec une même vitesse centrifuge. Mais, dans ce second cas, le module de la vitesse est plus élevé que dans le premier cas puisque l'image de l'objet se déplace plus vite lorsqu'elle est proche des bords de l'image ; et, en outre, chaque valeur de luminance est transférée dans plusieurs cellules à la fois, 28 à 31, car la taille de l'image de l'objet augmente au fur et à mesure qu'elle se déplace vers les bords de l'image.

Comme l'indique la formule (2) mentionnée précédemment, la vitesse de déplacement radiale du centre de l'image de l'objet, est proportionnelle à la distance r(t) du centre de l'objet au centre o de l'image et au module V de la vitesse du véhicule ; et est inversement proportionnelle à la distance D(t) entre le véhicule et l'objet. De même, la vitesse radiale de déplacement des valeurs de luminance dans la mémoire d'image intégrée de chaque corrélateur doit être proportionnelle à la distance d entre le centre E de la mémoire d'image et la cellule contenant la valeur de luminance à déplacer ; proportionnelle aussi au module V de la vitesse du véhicule ; et inversement proportionnelle à la distance hypothétique, D1(t) ou ... D100(t), qui est donnée par la loi temporelle correspondante au corrélateur considéré.

La figure 6 illustre le fonctionnement de pluralité de corrélateurs au cours du temps. Elle représente le graphe de la distance prédite rpi(t) entre le centre E de l'image prédite et le centre de l'image de l'objet dans cette image prédite, pour des corrélateurs C1,..., C6. La distance rpi(t) prédite par le i-ème corrélateur Ci est déduite des formules (1) et (4) :

$$rpi(t) \ = \ \frac{R. \, d0}{Di(t)} \ = \ \frac{R.d0}{DI \ - \ V.(t - Ti)} \quad (5)$$

A l'instant initial Ti la distance prédite rpi(t) est égale à la distance réelle r(Ti) entre le centre o de l'image analysée et le centre de l'image de l'objet puisque le corrélateur est alors initialisé avec une image analysée :

$$rpi \, (Ti) = r \, (Ti) \quad (6)$$

La formule (1) permet d'exprimer R.d0 en fonction de r(Ti) :

$$r \, (Ti) \ = \ \frac{R.d0}{DI} \quad (7)$$

donc :

$$rpi \, (t) \ = \ \frac{DI \, . \, r \, (Ti)}{DI \ - \ V. \, (t - Ti)} \quad (8)$$

Dans cet exemple, le nombre de corrélateurs est limité à 6 pour plus de clarté. Les corrélateurs sont initialisés respectivement à des instants successifs T1, T2, ..., T6, avec des images fournies par le capteur, dans lesquelles le centre de l'image de l'objet est situé respectivement à des distances croissantes r1, r2...,r6, par rapport au centre o de l'image analysée par le capteur.

Un premier corrélateur C1 est initialisé à l'instant T1 avec une image fournie par le capteur et dans laquelle le centre de l'image de l'objet est à une distance r1 du centre de l'image analysée. Ce premier corrélateur C1 détermine une suite d'images prédites dans lesquelles le centre de l'image de l'objet s'éloigne du centre E de l'image prédite selon un graphe portant la référence C1.

Un deuxième corrélateur, C2, est initialisé à l'instant T2, postérieur à T1, avec une image fournie par le capteur et dans laquelle le centre de l'image de l'objet est à une distance r2, supérieure à r1, par rapport au centre o de l'image analysée. Ce deuxième corrélateur détermine une suite d'images prédites dans lesquelles le centre de l'image de l'objet s'éloigne du centre E de l'image prédite, selon un graphe portant la référence C2.

De même, les autres corrélateurs (C3,...,C6) déterminent chacun une suite d'images prédites dans laquelle le centre E de l'image prédite se déplace respectivement selon les graphes portant les références C3,...,C6.

Dans cet exemple, le quatrième corrélateur, C4, a une loi temporelle qui correspond exactement à la loi de variation de la distance réelle entre le véhicule et l'objet. Par conséquent, la courbe C4 passe exactement par les points : (r4,T4),(r5,T5),(r6,T6). Si on considère ces graphes à un instant donné, ils ont chacun une pente différente. Par conséquent, une intégration de la luminance des images analysées et des images prédites pendant un intervalle de temps au voisinage de cet instant donné ne donne pas une même valeur intégrée. Cette différence de valeur intégrée correspond un flou autour de l'image de l'objet, dans les images intégrées dans les corrélateurs autres que le corrélateur C4.

6

En pratique, chaque corrélateur ignore l'existence ou non d'un objet visible dans les images. Il ne traite pas simplement le centre d'un objet, mais traite chaque pixel de l'image intégrée.

La détermination d'une image prédite telle que le centre de l'image de l'objet se déplace selon la formule (8), et telle que la taille de cette image augmente proportionnellement à rpi(t), est réalisée, pour chaque pixel de l'image intégrée, au moyen d'une opération de lecture dans une première cellule, suivie d'une opération d'écriture dans au moins une seconde cellule de la mémoire d'image intégrée. La valeur inscrite dans la seconde cellule est la somme de la valeur de luminance du pixel de l'image analysée, correspondant à cette seconde cellule, et d'une valeur de luminance prédite, qui est constituée tout simplement de la valeur de luminance intégrée lue dans la première cellule, après avoir multiplié cette dernière par un coefficient k, compris entre 0 et 1 pour assurer une intégration avec fuite.

La détermination de la valeur prédite consiste donc essentiellement à déterminer où est située la première cellule, sachant que les valeurs de luminance, dans l'image prédite du i-ème corrélateur, se déplacent conformément à la formule (8). Une différenciation de cette formule, montre qu'un déplacement radial élémentaire, d[rpi(t)] , d'une première cellule à une seconde cellule, doit avoir un module proportionnel à la distance r(Ti) entre le centre E de la mémoire d'image intégrée et la première cellule ; proportionnel au module V de la vitesse du véhicule ; proportionnel à la durée dt du déplacement, et proportionnel à la distance d'initialisation de tous les corrélateurs :DI.

$$d\,[rpi\,(t)] \ = \ DI \times V \times r\,(Ti) \times dt \quad (9)$$

En pratique, la détermination de chaque valeur de luminance prédite est faite pour des déplacements élémentaires, radiaux, de longueur fixée et égale à un pixel. Donc la première cellule est toujours connexe à la seconde cellule. Le module du déplacement élémentaire étant imposé, sa durée est alors variable en fonction de la position initiale de la première cellule, définie par r(Ti), et en fonction de la vitesse du véhicule. Les informations de luminance "sauteront" d'une cellule à une autre cellule connexe à un rythme d'autant plus rapide que les informations s'éloigneront du centre E de la mémoire d'image intégrée. Dans ce qui suit, chaque opération de lecture d'une valeur de luminance intégrée, dans une première cellule, et d'écriture d'une nouvelle valeur de luminance, dans une deuxième cellule, qui lui est connexe, et appelé "opération lecture-écritue" et son rythme est appelé "vitesse".

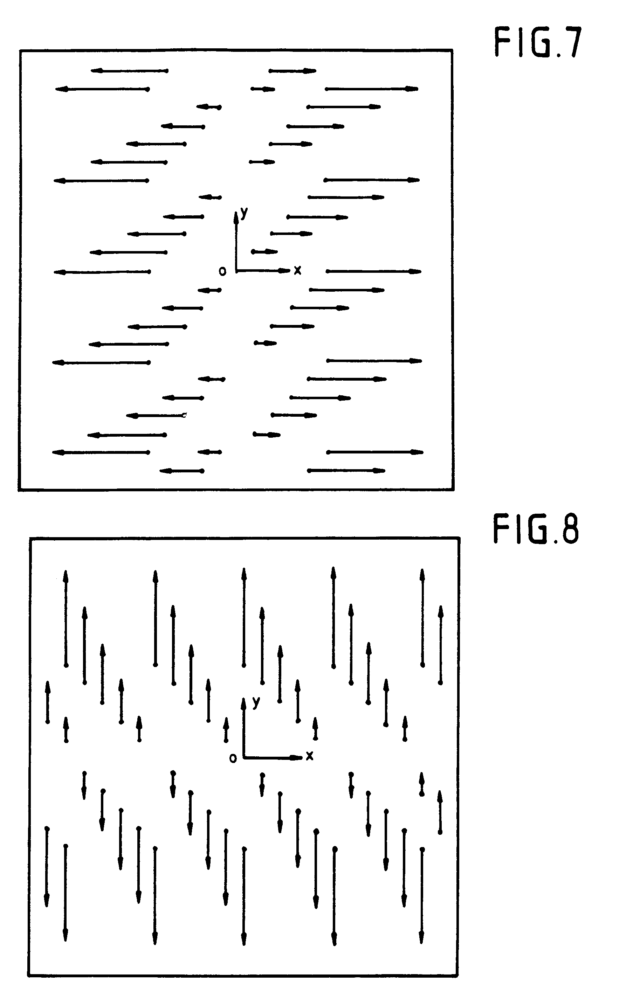

Les figures 7, 8 et 9 illustrent le procédé mis en oeuvre pour réaliser les opérations de lecture-écriture dans la mémoire d'image intégrée de chaque corrélateur, à une vitesse proportionnelle à la distance entre la cellule et le centre E de la mémoire, et constante pour une distance donnée, quelle que soit l'orientation du déplacement radial. Dans la mémoire, chaque cellule est repérée par des coordonnées x et y dans un repère oxy qui est centré au centre E de la mémoire. Le procédé consiste à combiner deux champs de vitesse représentés respectivement sur les figures 7 et 8, pour obtenir le champ de vitesse souhaité.

Le premier champ de vitesse est constitué de vecteurs qui sont tous parallèles à l'axe ox et dont le module est proportionnel à la valeur absolue de x et au module V de la vitesse du véhicule. Le second champ de vitesse comporte des vecteurs tous parallèles à l'axe oy et ayant un module proportionnel à la valeur absolue de y, et au module V de la vitesse du véhicule. Les coefficients de proportionnalité sont les mêmes pour les deux champs de vitesse. Par conséquent, pour toutes les cellules ayant des coordonnées (x,y) telles que $x^2+y^2 =$ constante, le module du vecteur vitesse est constant. Le champ de vitesse résultant de la superposition de ces deux champs orthogonaux est donc tel que, pour toutes les cellules situées à une distance d du centre de la mémoire d'intégration le vecteur vitesse résultant est radial et a un module constant.

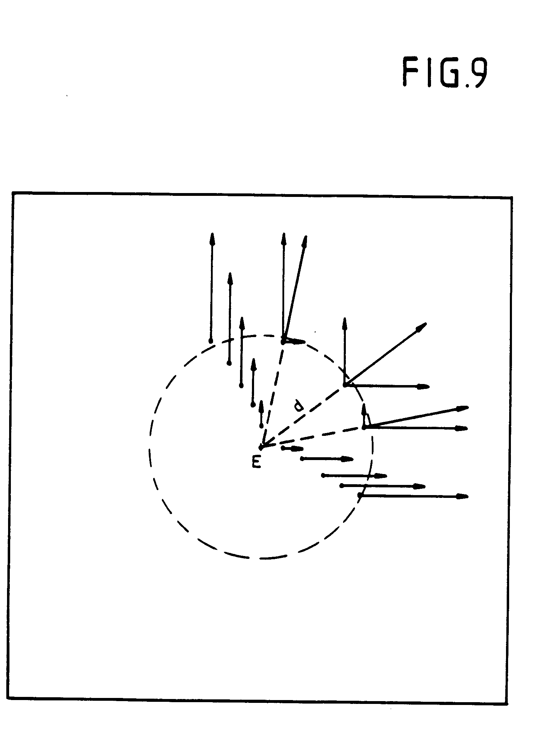

La figure 9 montre la détermination géométrique du vecteur vitesse résultant de ces deux champs pour trois cellules de la mémoire d'intégration situées toutes les trois à une distance d du centre E de la mémoire d'intégration.

En pratique, la réalisation de ces deux champs de vitesse orthogonaux consiste à opérer les lectures-écritures respectivement d'une colonne à une autre et d'une ligne à une autre. Le rythme des opérations est proportionnel à la valeur absolue de l'abscisse de la colonne, respectivement à la valeur absolue de l'ordonnée de la ligne. Les valeurs de luminance contenues dans les lignes les plus éloignées du centre E sont lues et écrites plus rapidement que celles situées près du centre E, par conséquent, il apparaît des lignes de cellules vides qui sont à remplir en inscrivant des valeurs de luminance identiques à celles inscrites dans une ligne voisine, ce qui revient à dédoubler cette dernière. De même, il apparaît des colonnes de cellules vides qui doivent être remplies en inscrivant des valeurs de luminance identiques à celles inscrites dans une colonne voisine, ce qui revient à dédoubler cette colonne voisine.

Le tableau ci-dessous indique le nombre de pas d'horloge entre la lecture dans une cellule et l'écriture dans une cellule connexe, et donne le nombre de pas d'horloge entre deux doublements d'un pixel d'abscisse x.

| Pixel d'abscisse | Nbre de pas d'horloge entre la lecture dans la cellule d'abscisse x et l'écriture dans la cellule x+1 | Nbre de pas d'horloge entre 2 doublements d'un pixel d'abscisse x |
|---|---|---|
| x=128 | Effacement | Néant |
| 127 | 129 | 129x128 = 16 512 |
| 126 | 130 | 130x129 = 16 770 |
| 125 | 131 | 131x130 = 17 030 |
| 124 | 132 | 17 292 |
| 123 | 133 | 17 556 |
| 122 | 134 | 17 882 |
| 121 | 135 | 18 090 |
| 120 | 137 | 137x135 = 18 415 |
| 119 | 138 | 18 906 |
| 91 | 180 | 31 040 |
| 90 | 182 | 182x180 : 32 760 |
| 89 | 184 | 33 481 |
| 51 | 321 | 100 794 |
| 50 | 328 | 328x321 = 105 288 |
| 49 | 334 | 109 552 |
| 31 | 528 | 270 336 |
| 30 | 546 | 546x528 = 288 288 |
| 29 | 565 | 398 490 |
| 21 | 780 | 580 887 |
| 20 | 819 | 819x780 = 638 820 |
| 19 | 862 | 705 978 |
| 11 | 1489 | 2 032 981 |
| 10 | 1638 | 2 438 982 |
| 9 | 1820 | 2 981 160 |
| 3 | 5461 | 22 368 256 |
| 2 | 8192 | 44 736 512 |
| 1 | 16384 | 134 217 000 |

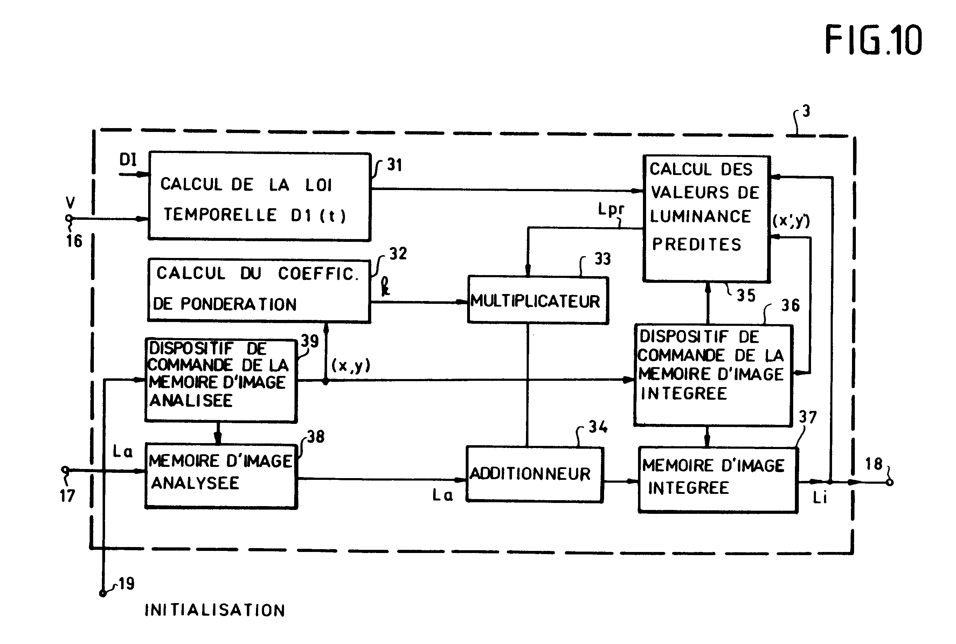

La figure 10 représente le schéma synoptique d'un exemple de réalisation d'un corrélateur tel que le corrélateur 3 représenté sur la figure 3. Cet exemple comporte : un dispositif 31 de calcul de la loi temporelle D1(t) ;

un dispositif 32 de calcul du coefficient de pondération ; un multiplicateur 33 ; un additionneur 34 ; un dispositif 35 de calcul des valeurs de luminance prédites ; un dispositif 36 de commande de la mémoire d'image intégrée ; une mémoire d'image intégrée, 37 ; une mémoire d'image analysée 38 ; et un dispositif 39 de commande de la mémoire d'image analysée.

Le dispositif 31 possède : une entrée recevant la valeur initiale de distance DI qui est une constante , une entrée reliée à la borne d'entrée 16 recevant la valeur V du module de la vitesse du véhicule ; et une sortie reliée à une première entrée du dispositif 35. Le dispositif 31 fournit sur cette sortie un signal d'horloge qui a un rythme proportionnel à la dérivé logarithmique de distance D1(t) calculée selon la première loi temporelle, conformément à la formule (4). Le dispositif 35 possède une deuxième entrée reliée à une sortie de la mémoire 37, une troisième entrée reliée à une sortie du dispositif 36, et une sortie reliée à une première entrée du multiplicateur 33.

Le dispositif 35 a pour fonction de calculer les valeurs de luminance prédites, Lpr, à partir des valeurs de luminance intégrées, Li, qui sont lues dans la mémoire 37 sous la commande du dispositif 36. La troisième entrée du dispositif 35 reçoit la valeur des coordonnées (x', y') de la cellule dans laquelle est lue la valeur de luminance intégrée Li qui est reçue par la seconde entrée du dispositif 35. Le dispositif 35 calcule les valeurs de luminance prédites, au rythme défini par le dispositif 31 pour que l'image prédite évolue en fonction de la distance D1(t).

Une seconde entrée du multiplicateur 33 est reliée à une sortie du dispositif 32 qui fournit une valeur du coefficient de pondération k. La sortie du multiplicateur 33 est reliée à une première entrée de l'additionneur 34 pour lui fournir une valeur de luminance prédite qui est pondérée par le coefficient k, ce dernier étant fonction des coordonnées (x,y) de la cellule dans laquelle une écriture va être réalisée à l'instant considéré. Ce coefficient de pondération est plus grand pour les pixels situés près du centre de l'image que pour les pixels situés près du bord. Une intégration plus longue est nécessaire pour les valeurs de luminance proches du centre de l'image, car leurs déplacements sont plus lents que sur les bords.

Les coordonnées (x,y) de la cellule où va être inscrite une nouvelle valeur de luminance intégrée sont fournies à une entrée du dispositif 32 et à une entrée du dispositif 36 par une sortie du dispositif 39 de commande de la mémoire d'image analysée. Une entrée du dispositif 39 est reliée à la borne d'entrée 19 pour recevoir le signal d'initialisation. Une sortie du dispositif 39 est reliée à une entrée de commande de la mémoire d'image analysée,38, pour commander l'inscription des valeurs de luminance La qui sont analysées par le capteur d'image et pour commander la lecture de ces valeurs de luminance.

L'image analysée est supposée centrée sur le vecteur vitesse du véhicule, au moyen d'un dispositif de recalage d'image, de type connu, et non représenté sur les figures.

La mémoire 38 possède une entrée de données reliée à la borne d'entrée 37 pour recevoir les valeurs de luminance analysées La. Elle possède une sortie de données reliée à une seconde entrée de l'additionneur 34 pour lui fournir les valeurs de luminance analysées. Une sortie de l'additionneur 34 est reliée à une entrée de données de la mémoire d'intégration 37 pour lui fournir la somme d'une valeur de luminance analysée et d'une valeur de luminance prédite et pondérée. La mémoire 37 possède une entrée de commande reliée à une sortie du dispositif 36 pour recevoir des signaux de commande de lecture et d'écriture. La sortie de données de la mémoire 37 est reliée aussi à la borne de sortie 18 pour fournir chaque valeur de luminance intégrée Li.

Le dispositif 35 de calcul des valeurs de luminance prédites met en oeuvre le procédé décrit à propos des figures 7 à 9. Lorsqu'il n'y a pas doublement du pixel, le dispositif 35 transmet, sans modification, la valeur de luminance intégrée lue dans la cellule (x,y) de la mémoire 37, pour le calcul et l'écriture d'une nouvelle valeur de luminance intégrée, dans la cellule connexe (x, y+1) ; puis ultérieurement, il transmettra une valeur de luminance lue dans la même cellule (x,y), pour le calcul et l'écriture d'une nouvelle valeur de luminance intégrée, dans la cellule connexe (x+1,y). Comme cela a été expliqué ci-dessus ces deux opérations sont indépendantes car le rythme des opérations de lecture-écriture dans la direction ox dépend de x, alors que le rythme des opérations lecture-écriture dans la direction oy dépend de y.

Lorsque le doublement d'un pixel est nécessaire, le dispositif (35) transmet deux fois la valeur de luminance intégrée lue dans la cellule (x,y), pour le calcul et l'écriture d'une nouvelle valeur de luminance intégrée, dans les cellules connexes (x,y+1) et (x,y+2) ; puis ultérieurement, il transmettra deux fois la valeur de luminance lue dans la même cellule (x,y), pour le calcul et l'écriture d'une nouvelle valeur de luminance intégrée, dans les cellules connexes (x+1,y) et (x+2,y).

Ces opérations sont commandées par le dispositif 36, en fonction de la valeur V du module de la vitesse du véhicule et en fonction des coordonnées (x',y') de la cellule où une nouvelle valeur de luminance intégrée est à calculer et à inscrire, conformément au tableau mentionné précédemment.

L'invention est applicable notamment à un dispositif de suivi de terrain pour évaluer constamment la distance entre un aéronef et les obstacles situés au sol.

### Claims

1. Procédé pour estimer la distance entre un objet fixe et un véhicule en déplacement à partir d'images de l'objet analysées au moyen d'un capteur d'images monté sur le véhicule, caractérisé en ce qu'il consiste à :
   - centrer l'axe optique du capteur d'images avec la direction de déplacement du véhicule ;
   - intégrer, dans une pluralité de mémoires d'image correspondant respectivement à une pluralité de valeurs prédéterminées pour la distance, les valeurs de luminance des pixels des images analysées successivement par le capteur, et les valeurs de luminance des pixels d'une suite d'images dites prédites, la valeur de luminance de chaque pixel d'une image prédite étant déterminée en fonction de la valeur de luminance intégrée pour le pixel considéré, en fonction de la vitesse du véhicule, en fonction de la position du pixel, dans l'image prédite et en fonction de la valeur de distance correspondant à la mémoire considérée, de telle sorte que l'image prédite est affectée d'un grandissement croissant en fonction du temps ;
   - rechercher, dans la pluralité de mémoires, celle où la valeur de luminance intégrée présente le plus grand contraste, et en déduire une estimation de distance.

2. Procédé selon la revendication 1, caractérisé en ce que l'instant initial, pour le calcul des valeurs de luminance d'une suite d'images prédites correspondant à une distance donnée, est différent pour chacune des mémoires.

3. Procédé selon la revendication 1, caractérisé en ce que pour déterminer les valeurs de luminance des images prédites, il consiste à lire les valeurs de luminance intégrées, et à inscrire de nouvelles valeurs de luminance intégrées dans une mémoire d'image, en sautant de ligne à ligne, avec une fréquence proportionnelle à la distance entre cette ligne et le centre de cette mémoire et en sautant de colonne à colonne, avec une fréquence proportionnelle à la distance entre cette colonne et le centre de cette mémoire ; et en ce qu'il consiste à pondérer les valeurs de luminance intégrée qui sont lues, en donnant plus de poids à celles des pixels plus proches du centre de l'image.

4. Dispositif pour la mise en oeuvre du procédé selon la revendication 1 comportant un capteur d'images (1), monté sur le véhicule pour analyser des images de l'objet, caractérisé en ce que le capteur d'images (1) centre l'axe optique du capteur d'image avec la direction de déplacement du véhicule, et en ce que le dispositif comporte en outre :
   - des moyens corrélateurs (3 à 6) pour intégrer dans une pluralité de mémoires d'image correspondant respectivement à une pluralité de valeurs pour la distance, les valeurs de luminance des pixels des images analysées successivement, et les valeurs de luminance des pixels d'une suite d'images dites prédites, la valeur de luminance de chaque pixel d'une image prédite étant déterminée en fonction de la valeur de luminance intégrée pour le pixel considéré, en fonction de la vitesse du véhicule, en fonction de la position du pixel, dans l'image prédite et en fonction de la valeur de distance correspondant à la mémoire considérée ;
   - des moyens soustracteurs et de sélection (8 à 13) pour rechercher, dans la pluralité de mémoires (37), celle où la valeur de luminance intégrée présente le plus grand contraste, et en déduire une estimation de distance.

### Patentansprüche

1. Verfahren zum Schätzen des Abstandes zwischen einem festen Gegenstand und einem in Bewegung befindlichen Fahrzeug anhand von Bildern des Gegenstandes, die mittels eines am Fahrzeug angebrachten Bildsensors analysiert werden, dadurch gekennzeichnet, daß es umfaßt:
   - Ausrichten der optischen Achse des Bildsensors mit der Bewegungsrichtung des Fahrzeugs;
   - Integrieren der Helligkeitswerte der Bildelemente der vom Sensor nacheinander analysierten Bilder und der Helligkeitswerte der Bildelemente einer folge von sogenannten vorhergesagten Bildern in mehreren Bildspeichern, die jeweils mehreren vorgegebenen Werten für den Abstand entsprechen, wobei der Helligkeitswert eines jeden Bildelementes eines vorhergesagten Bildes in Abhängigkeit vom integrierten Helligkeitswert des betreffenden Bildelementes, in Abhängigkeit von der Geschwindigkeit des Fahrzeugs, in Abhängigkeit von der Position des Bildelementes im vorhergesagten Bild und in Abhängigkeit von dem dem betreffenden Speicher entsprechenden Abstandswert bestimmt

EP 0 373 979 B1

wird, derart, daß das vorhergesagte Bild einer von der Zeit abhängigen Zunahme der Vergrößerung unterworfen ist;
- Suchen desjenigen Speichers in der Mehrzahl der Speicher, bei dem der intergrierte Helligkeitswert den größten Kontrast aufweist, und Ableiten einer Schätzung des Abstandes aus diesem Wert.

2. Verfahren gemäß Anspruch 1, dadurch gekennzeichnet, daß der Anfangszeitpunkt für die Berechnung der Helligkeitswerte einer folge von vorhergesagten Bildern, die einem gegebenen Abstand entsprechen, für jeden der Speicher verschieden ist.

3. Verfahren gemäß Anspruch 1, dadurch gekennzeichnet, daß es zur Bestimmung der Helligkeitswerte der vorhergesagten Bilder darin besteht, daß die integrierten Helligkeitswerte gelesen werden und daß die neuen integrierten Helligkeitswerte in einen Bildspeicher geschrieben werden, in dem von einer Zeile zur nächsten mit einer Frequenz, die zum Abstand zwischen dieser Zeile und dem Mittelpunkt dieses Speichers proportional ist, gesprungen wird und in dem von einer Spalte zur nächsten mit einer Frequenz, die zum Abstand zwischen dieser Spalte und dem Mittelpunkt dieses Speichers proportional ist, gesprungen wird;
und daß es darin besteht, daß die integrierten Helligkeitswerte, die gelesen werden, gewichtet werden, indem denjenigen Bildelementen, die sich näher am Mittelpunkt des Bildes befinden, größere Gewichte verliehen werden.

4. Einrichtung zur Ausführung des Verfahrens gemäß Anspruch 1, mit einem Bildsensor (1), der am Fahrzeug angebracht ist, um die Bilder des Gegenstandes zu analysieren, dadurch gekennzeichnet, daß der Bildsensor (1) seine optische Achse mit der Richtung der Bewegung des Fahrzeugs ausrichtet und daß die Einrichtung außerdem umfaßt:
- Korrelatormittel (3 bis 6), um in einer Mehrzahl von Bildspeichern, die jeweils mehreren Werten für den Abstand entsprechen, die Helligkeitswerte der Bildelemente der nacheinander analysierten Bilder und die Helligkeitswerte der Bildelemente einer folge von sogenannten vorhergesagten Bildern zu integrieren, wobei der Helligkeitswert eines jeden Bildelementes in Abhängigkeit vom integrierten Helligkeitswert für das betreffende Bildelement, in Abhängigkeit von der Geschwindigkeit des Fahrzeugs, in Abhängigkeit von der Position des Bildelements im vorhergesagten Bild und in Abhängigkeit von dem dem betreffenden Speicher entsprechenden Abstandswert bestimmt wird;
- Subtraktions- und Auswahlmittel (8 bis 13), um in den mehreren Speichern (37) denjenigen Speicher zu suchen, in dem der integrierte Helligkeitswert den größten Kontrast aufweist, und um daraus eine Schätzung des Abstandes abzuleiten.

## Claims

1. A process for estimating the distance between a fixed object and a moving vehicle using images of the object analysed by means of an image sensor mounted on the vehicle, characterised in that it consists of:
- centring the optical axis of the image sensor with the direction of displacement of the vehicle;
- integrating, in a plurality of image memories corresponding respectively to a plurality of predetermined values for distance, the luminance values of the pixels of the images analysed in succession by the sensor, and the luminance values of the pixels of a series of images described as predicted, the luminance value of each pixel of a predicted image being determined as a function of the integrated luminance value for the pixel in question, as a function of the speed of the vehicle, as a function of the position of the pixel in the predicted image and as a function of the value for distance corresponding to the memory in question, such that the predicted image is modified by magnification increasing as a function of time;
- seeking, among the plurality of memories, the one in which the integrated luminance value has the greatest contrast, and deducing therefrom an estimation of distance.

2. A process according to Claim 1, characterised in that the initial moment, for calculating the luminance values of a series of predicted images corresponding to a given distance, is different for each of the memories.

3. A process according to Claim 1, characterised in that in order to determine the luminance values of the predicted images, it consists of reading off the integrated luminance values, and entering new integrated luminance values in an image memory, skipping from line to line with a frequency in proportion to the distance between this line and the centre of this memory, and skipping from column to column with a frequency in proportion to the distance between this column and the centre of this memory;

and in that it consists of weighting the integrated luminance values which are read off, giving more weight to those for the pixels closest to the centre of the image.

4. A device for implementing the process according to Claim 1 comprising an image sensor (1), mounted on the vehicle for analysing images of the object, characterised in that the image sensor (1) centres the optical axis of the image sensor with the direction of displacement of the vehicle, and in that the device further comprises:

- correlation means (3 to 6) for integrating, in a plurality of image memories corresponding respectively to a plurality of values for distance, the luminance values of the pixels of the images analysed in succession, and the luminance values of the pixels of a series of images described as predicted, the luminance value of each pixel of a predicted image being determined as a function of the integrated luminance value for the pixel in question, as a function of the speed of the vehicle, as a function of the position of the pixel in the predicted image and as a function of the value for distance corresponding to the memory in question;

- subtracting and selecting means (8 to 13) for seeking, among the plurality of memories (37), the one in which the integrated luminance value has the greatest contrast, and deducing therefrom an estimation of distance.

# FIG.1

EP 0 373 979 B1

FIG.2

DO = 1,5 Km

DO = 2 Km

DO = 3 Km

EP 0 373 979 B1

14

FIG.3

CAPTEUR D'IMAGES — 1

MESURE DE VITESSE — 2

V

CORRELATEUR INITIALISE A T 1 — 3

CORRELATEUR INITIALISE A T 2 — 4

CORRELATEUR INITIALISE A T 3 — 5

CORRELATEUR INITIALISE A T 100 — 6

DISPOSITIF D'INITIALISATIONS SUCCESSIVES — 7

CALCUL DE MOYENNE — 8

SOUSTRACTEUR — 9

SOUSTRACTEUR — 10

SOUSTRACTEUR — 11

SOUSTRACTEUR — 12

SELECTION DU CONTRASTE MAXIMAL — 13

VIDEO — 14

D(t) — 15

16 17 18 19

15

FIG.4

FIG.5

FIG.6

FIG.7

FIG.8

FIG.9

# FIG.10

EP 0 373 979 B1